# EUROPEAN PATENT SPECIFICATION

(11) **EP 2 360 010 B1**
(45) Date of publication and mention of the grant of the patent: **31.10.2012**
(21) Application number: 11001494.1
(22) Date of filing: 23.02.2011
(51) Int. Cl.: B29D 30/58, B29D 30/16, B29D 30/28, B29D 30/30

(54) **Arrangement in tire retreading rolling machine for tires recapping**
Anordnung in einer Reifenrunderneuerungsrollmaschine zur Reifenrunderneuerung
Agencement dans une machine de rechapage de pneus

(30) Priority: 24.02.2010 BR MU9000242 U
(43) Date of publication of application: 24.08.2011
(73) Proprietor: Möller, Lucas, 93030-250 São Leopoldo RS (BR)
(72) Inventor: Möller, Lucas, 93030-250 São Leopoldo RS (BR)
(74) Representative: Garcia Cabrerizo, Francisco

(56) References cited:
- EP-A1- 0 704 296
- WO-A1-03/097337
- GB-A- 760 771
- JP-A- 8 300 509

## Description

The present patent relates to a novel building arrangement introduced in a tire retreading rolling machine used for tires recapping.

During the tires recapping process, an operation named rolling is performed, which consists in applying pressure for adhering a new tread to the carcass of the tire being recovered. While this operation is performed, the air that might be trapped between the tread and the tire carcass must be totally expelled. Otherwise, perfect parts adhesion will not occur, causing loss of tread parts during vehicle running.

Conventional tire retreading rolling machines are machines equipped with a rotating device, which receives a rim to which a tire carcass is mounted, with a tread already applied to it, and an arm with an extreme roll pressing the tread center strip against the tire carcass, thereby expelling the air might have been trapped between the layers.

Examples of tire retreading rolling machines are found in Brazilian patent documents MU 7400795-5, MU 7800332-6 and MU 8700907-2 on which the preamble of the independent claim 1 in the present invention is based.

However, the operation of the tire retreading rolling machines is limited to the tread center strip, thus, proper pressing of the tire shoulder does not occur, i.e., the transition between the tire tread and flank. Such fact may result in failing adhesion on that tire area, jeopardizing the recapping process.

The document of patent GB 760 771 describes a machine for applying a tread to a tire carcass comprising a base with a central column, at half height of which a support for the tire is positioned, and near the top of the column a support with rolls work by pressing the transition area transition between the tire tread and flank. The rolls are supported by bearing on shafts whose ends are articulated on connecting rods articulated on the support and opposite ends on a central structure with a spring that presses the rolls against the tire flanks. However, this machine does not provide means for adjusting the pressure of the rolls against the tire flanks or means for regulating the clearance of the rolls as a result of the tire width.

The document of patent WO 03/097337 describes a device and a method for pressing and adhering a tread to a tire carcass through rolls acting in the central area of the tread. However, this machine does not provide rolls to apply pressure to the transition area between the read and tire flank.

The document of patent EP 0.704.296 describes a device and a method for applying a pre-molded, pre-vulcanized tread to a tire carcass comprising a base with a central column, at half height of which a support for the tire is positioned, and near the top of the column a support articulated with a roll that works by pressing the central area of the tread. However, this machine does not provide rolls to apply pressure to the transition area between the tread and tire flank.

The document of patent JP 8 300509 describes a machine for applying a tread to the tire carcass comprising a base with a curved column having a shaft with an extreme near its top, which is pressed by a hydraulic cylinder against the central area of the tread. An articulated arm at the base of the machine is moved against the tire by a hydraulic cylinder fixed to the column, and this arm ends have two rolls pressing on the transition area between the tread and tire flank. However, this machine does not provide means for the support and rotation of the tire or means for regulating the clearance of the rolls as a result of the tire width.

Thus, the objective of the present patent is a novel building arrangement introduced in a tire retreading rolling machine, which has means to exert pressure on the tread and transition area between the tread and the tire side, means to independently adjust the pressure of the rolls against each side of the tire and means to regulate the clearance of the rolls as a result of the tire width.

According to the invention there is provided an arrangement as defined in claim1. The arrangement in the tire retreading rolling pair of secondary rolls, having a semi-spherical shapes, which are laterally positioned, in such a way to exert transversal pressure on the tread. Secondary spherical rolls perform more accurate and smoother rolling on tire shoulders area, where the tread thickness is thinner, requiring smoother rolling with more directed outline. Thus, it is possible to apply appropriate pressure to all parts of the tread, minimizing the lack of the adhesion problem in the carcass.

The arrangement in the tire retreading rolling machine proposed by the present patent, is hereon described in detail, based on the enclosed drawings, listed below:
Figure 1 - perspective of the tire retreading rolling machine incorporating the rolling device.
Figure 2 - perspective of the rolling device isolated from the machine;
Figure 3 - front view of the rolling device;
Figure 4- left side view of the rolling device;
Figure 5 - right side view of the rolling device;
Figure 6- upper side view of the rolling device;
Figure 7 - lower side view of the rolling device.

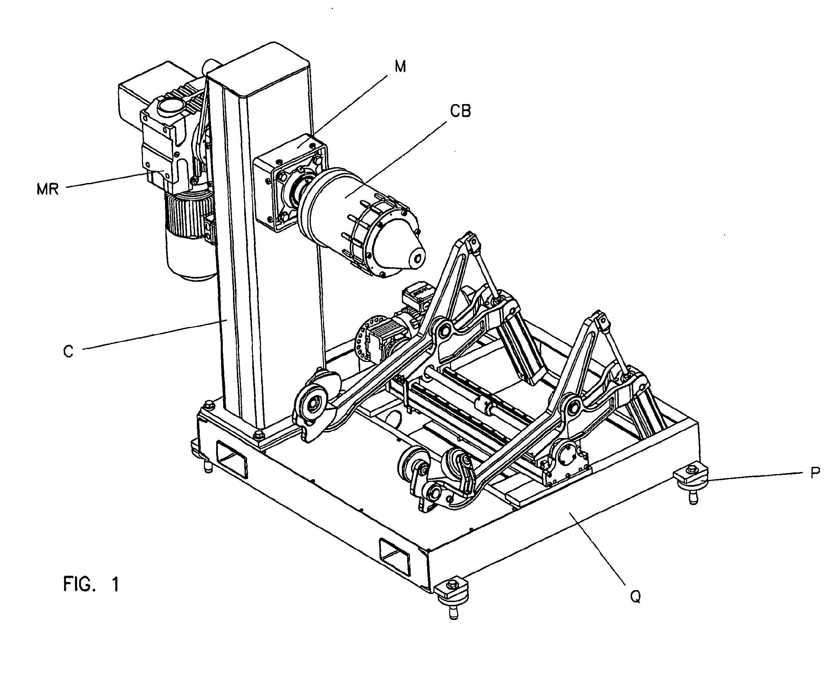

Figure 1 shows the tire retreading rolling machine comprising a structure composed of a lower frame (Q) provided with adjustable feet (P) and one column (C) on one of its vertices. The column (C) has on its outer side a motoreducer set (MR), that is, an electric motor whose output shaft is mounted directly on a gearbox that transmits the right rotation, which rotates a hub (CB) positioned on the column inner side. A bearing (M), held to the column (C), supports the hub (CB) shaft, on which the tire to be processed is mounted.

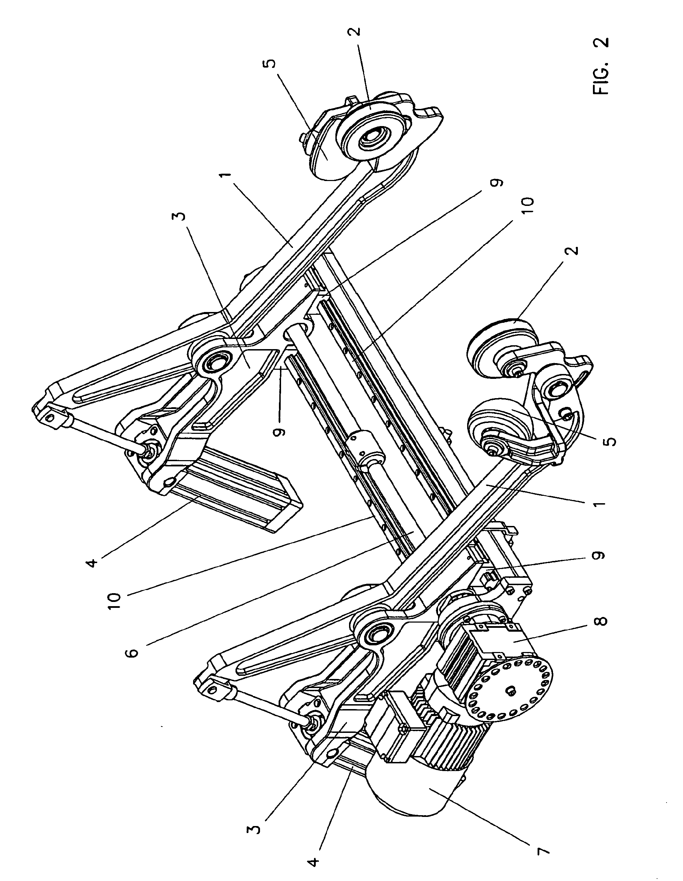

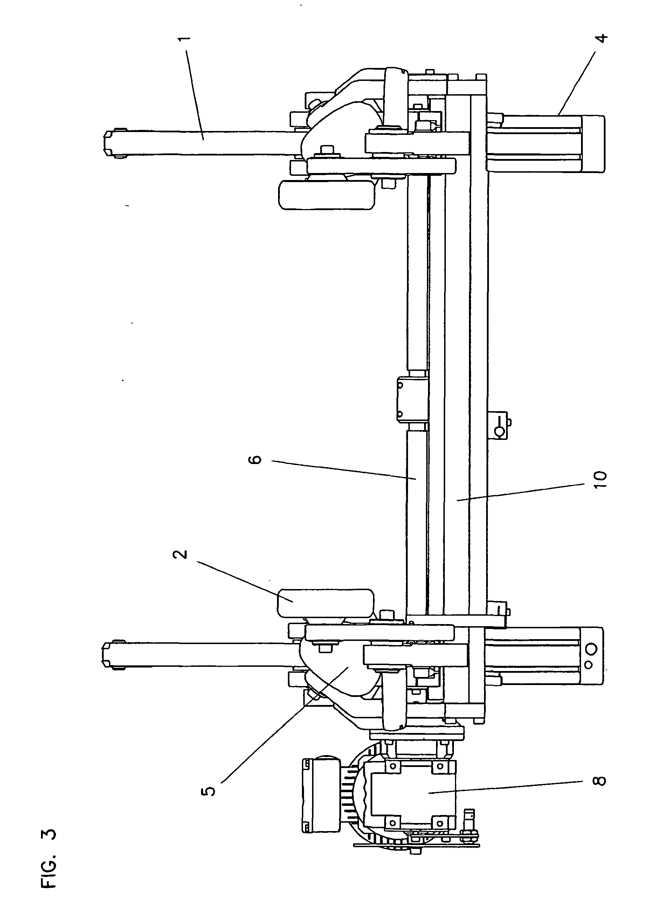

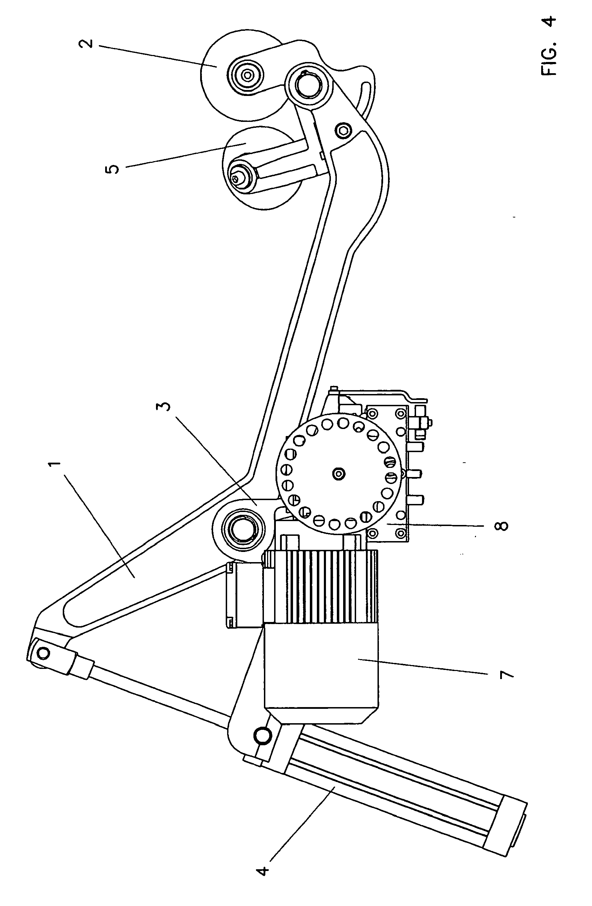

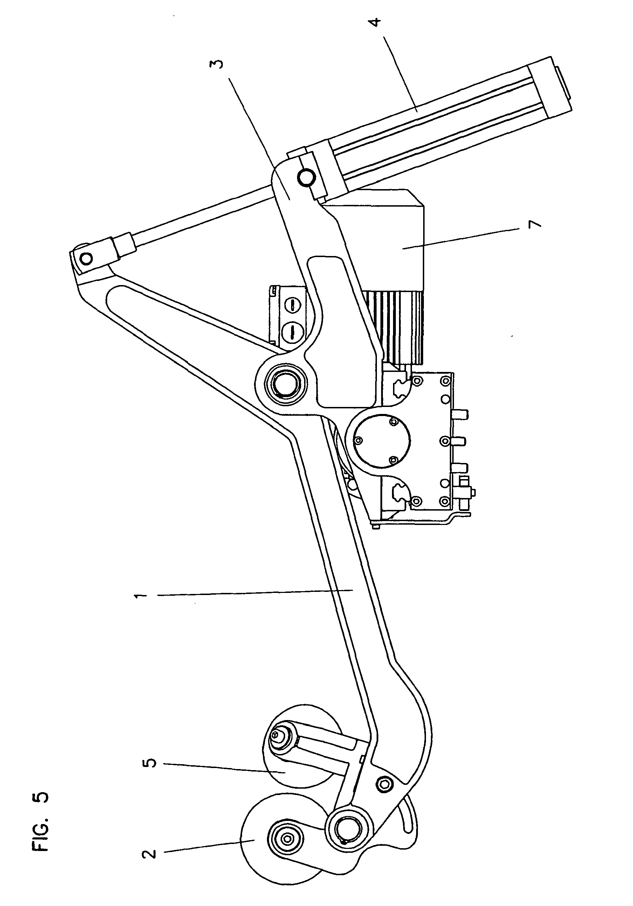

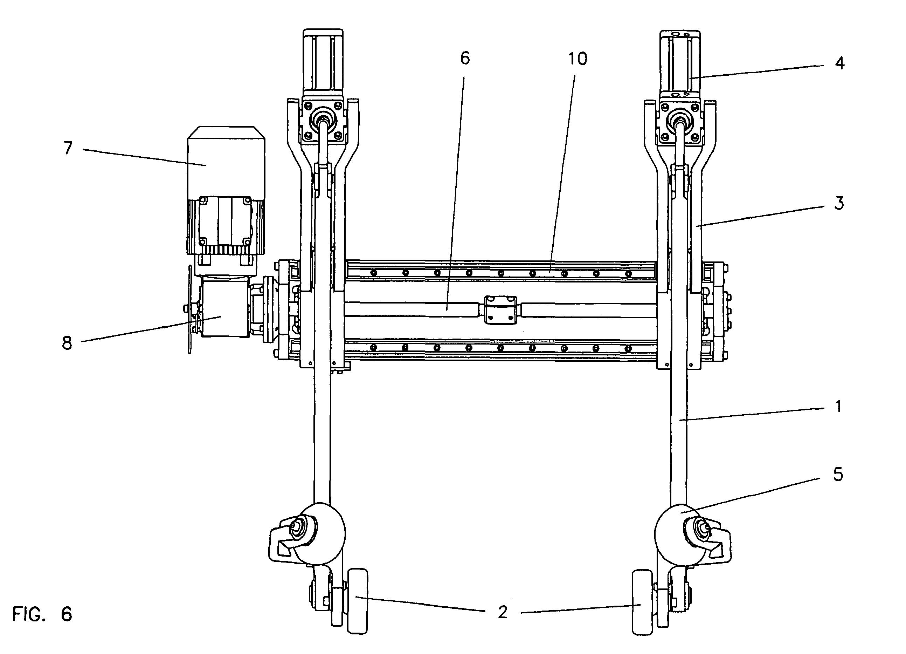

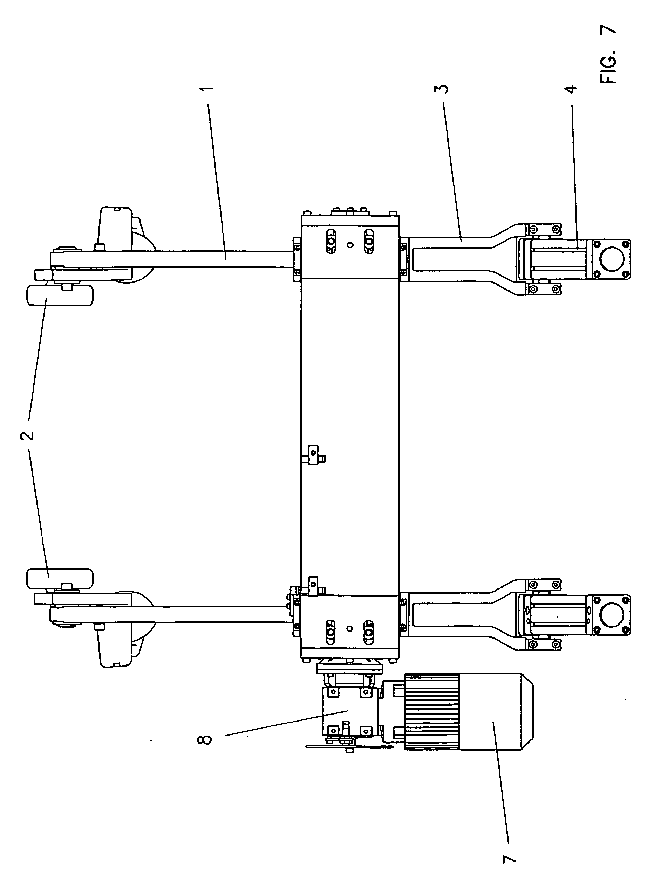

Figures 2 to 7 show the rolling device mounted on the frame (Q) comprising arms (1) with end rolls (2), on which the tire is rested on the wheeling position (not shown). The rolls (2) press the new tread against the tire carcass, expelling the air that may have been trapped. The arms (1) are centrally pivoting in transversal gears (3), by the action of hydraulic or pneumatic cylinders (4), allowing to get rolls (2) closer of farther to/from the new tread applied to the tire carcass.

Secondary rolls (5) with semi-spherical shape, are positioned on the arms end (1) from the outside, and close to the main rolls (2), so as to exert pressure also on the tread sides, next to the tire shoulder.

A horizontal spindle (6) is driven by a motor (7) and reducer (8) set, and is intended to move the arms (1), making the secondary rolls (5) exert pressure against the tire shoulders. The gears (3) are mounted over the bearings (9) sliding on the machine busbars (10), causing the rolls (2) and the secondary (5) to exert pressure throughout the tread, including the shoulders area.

## Claims

1. "ARRANGEMENT IN TIRE RETREADING ROLLING MACHINE FOR TIRES RECAPPING", comprising a structure composed of a lower frame (Q) provided with adjustable feet (P) and one column (C) on one of its vertices, and column (C) has on its outer side an electric motor whose output shaft is mounted directly on a gearbox that transmits the right rotation (MR) which rotates a hub (GB) positioned on the column inner side, with bearing (M) held to column (C) and supporting the hub (CB) shaft, on which the tire to be processed is mounted, **characterized in that** is comprises:
- Arms (1) with end rolls (2), on which the tire is rested on the wheeling position, with the arms (1) centrally pivoting in transversal gears (3), by the action of cylinders (4);
- Secondary rolls (5) with semi-spherical shape, positioned on the arms end (1) from the outside, and close to the main rolls (2), so as to press the tread sides, next to the tire shoulder;
- A horizontal spindle (6), driven by a motor (7) and reducer (8) set, to get arms (1) closer to the secondary rolls (5) against the tire shoulders area;
- The transversal gears (3) are mounted over the bearings (9) sliding on machine busbars (10).

## Patentansprüche

1. "Anordnung in einer reifenrunderneuerungs-walzmaschine für die runderneuerung von reifen", die eine Struktur umfasst, die aus einem unteren Rahmen (Q) gebildet wird, der mit einem verstellbaren Fuß (P) und einer Säule (C) an einem seiner Eckpunkte ausgestattet ist, wobei die Säule (C) an der Außenseite einen Elektromotor besitzt, dessen Abtriebswelle direkt auf einem Getriebe montiert ist, das die Rechtsdrehung (MR) überträgt, die eine auf der Innenseite der Säule positionierte Nabe (GB) dreht, mit einem Wälzlager (M), das an der Säule (C) gehalten wird und die Nabenwelle (CB) lagert, auf welcher der zu verarbeitende Reifen montiert wird, **dadurch gekennzeichnet, dass** diese Folgendes umfasst:
- Arme (1) mit Endwalzen (2), auf denen der Reifen in der Rollposition ruht, wobei die Arme (1) aufgrund der Einwirkung von Zylindern (4) zentral in Querzahnrädern (3) schwenken;
- Nebenwalzen (5) mit einer halbkugelförmigen Form, die von außen und in der Nähe der Hauptwalzen (2) auf den Armenden positioniert sind, um die Laufflächenseiten neben den Reifenschulter zu pressen;
- Eine horizontale Spindel (6), die von einer Baugruppe aus einem Motor (7) und einem Reduktionsgetriebe (8) angetrieben wird, um die Arme (1) näher an die Nebenwalzen (5) gegen den Bereich der Reifenschultern zu bringen;
- Die Querzahnräder (3) sind über den Wälzlagern (9) montiert, die auf Maschinen-Sammelschienen (10) gleiten.

## Revendications

1. « Dispositif sur machine à roulements de retraitement de pneus pour le rechapage de pneus », comprenant une structure composée d'un cadre inférieur (Q) équipé de pieds réglables (P) et d'une colonne (C) à l'un de ses sommets, et la colonne (C) possède sur sa face externe un moteur électrique dont l'arbre de sortie est monté directement sur une boîte de transmission qui transmet la rotation requise (MR) qui fait tourner un pivot (CB) placé sur la face interne de la colonne, avec palier (M) fixé à la colonne (C) et soutenant l'axe du pivot (CB), sur lequel le pneu devant être traité est monté, **caractérisé en ce qu'**il comprend :
- Des bras (1) avec des roulements d'extrémité (2), sur lesquels repose le pneu dans la position de roulement, avec les bras (1) pivotant centralement dans des engrenages transversaux (3), sous l'action de cylindres (4) ;
- Des roulements secondaires (5) de forme semi-sphérique, placés sur l'extrémité des bras (1) depuis l'extérieur, et près des roulements principaux (2), de façon à comprimer les faces sculptées, à côté de l'épaulement du pneu ;
- Un axe horizontal (6), entraîné par un ensemble moteur (7) et réducteur (8), pour rapprocher les bras (1) des roulements secondaires (5) contre la zone des épaulements du pneu ;
- Les engrenages transversaux (3) sont montés sur les paliers (9) glissant sur des jeux de barres (10) de la machine.
